# EUROPEAN PATENT APPLICATION

(11) **EP 4 574 738 A1**
(43) Date of publication of application: **25.06.2025**
(21) Application number: 23307263.6
(22) Date of filing: 19.12.2023
(51) Int. Cl.: B66C 13/18, G05B 13/04, G06Q 10/20

(54) **METHOD TO OPERATE HOISTING APPLIANCE FOR ACCURATE PREDICTIVE MAINTENANCE**

(71) Applicant: SCHNEIDER ELECTRIC INDUSTRIES SAS, 92500 Rueil-Malmaison (FR)
(72) Inventor: BLONDEL, Charles, 38000 GRENOBLE (FR); DOGAN, Leyla, 59800 LILLE (FR)
(74) Representative: Plasseraud IP

(57) **Abstract**

The invention relates to a method for operating a hoisting appliance spanning a hoisting area, the hoisting appliance comprising N≥2 movable parts (2, 3, 4) for the transport of a load (6) from a starting point to a destination point, the N movable parts being configured for a linear movement along any of three X, Y and Z orthogonal axes or for an angular movement. The method comprises choosing speed parameters for displacement of the N movable parts for transporting the load from the starting point to the destination point, by, in a control device:
determining (S1, S2) a set of speed parameters for displacement of said N movable parts belonging to an operating zone (71, 72, 73) for which a predictive maintenance function of said hosting appliance yields results which are above a determined accuracy threshold;
selecting (S3), among said set, speed parameters which minimize a travel time of said load from said starting point to said destination point.

## Description

### Technical Field

This disclosure pertains to the field of hoisting appliances such as cranes, gantry cranes or overhead travelling cranes. This disclosure notably relates to a method for optimizing operation of such hoisting appliances to allow reliable predictive maintenance.

### Background Art

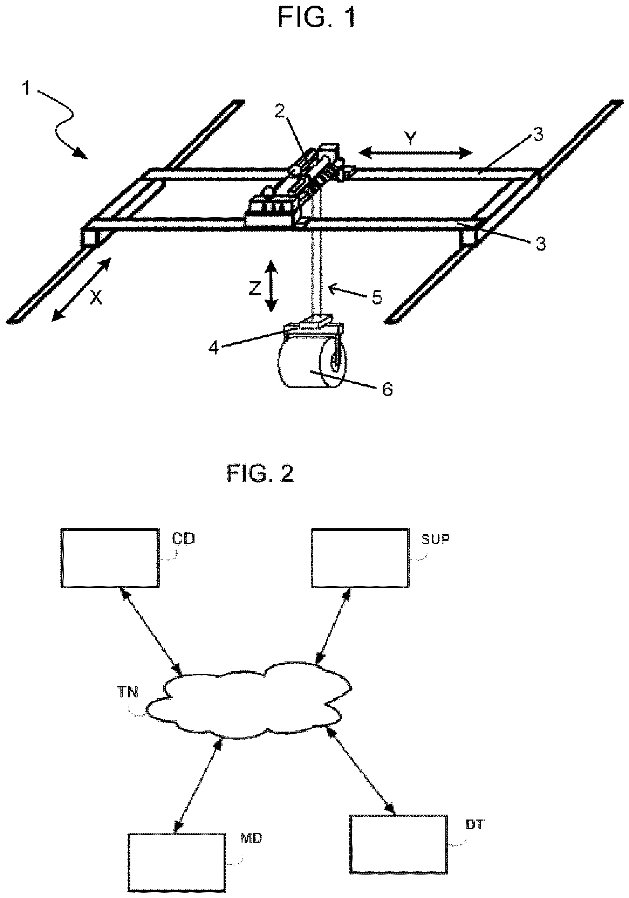

Hoisting appliances 1 such as bridge cranes, gantry cranes or overhead travelling cranes usually comprise a trolley 2 which can move over a single girder or a set of rails 3 along a horizontal axis Y, as shown in FIG. 1. This first movement along the Y-axis is generally referred to as short travel movement and/or trolley movement. Depending on the type of appliance, the girder or the set of rails 3, also referred to as bridge, may also be movable along a horizontal axis X perpendicular to the Y-axis, thus enabling the trolley to be moved along both the X- and Y-axes. This second movement along the X-axis is generally referred to as long-travel movement and/or bridge, crane or gantry movement. The amount of available short travel along the Y-axis and long travel along the X-axis determines a hoisting area that is spanned by the hoist 1.

A tool 4, also called load suspension device, is associated with a reeving system having cables which pass through the trolley 2, the length of the cables 5 being controlled by the trolley 2 to vary, thereby enabling displacement of a load 6 along a vertical axis Z, referred to as hoisting movement.

In addition, some hoisting appliances such as cranes may have additional movable parts, allowing an angular movement of the load, such as a rotation around the vertical Z axis.

Such hoisting appliances, when used in an industrial environment or in ports and harbors, operate at high dynamics and speeds and are part of critical processes which are subject to high production requirements. There is therefore a strong need of predictive maintenance on such hoisting appliances, which allows detecting failure before it happens and informing the operator of the hoisting appliances accordingly. Indeed, repairing or replacing a defective product always presents a bigger cost, as compared to a planned intervention: - the failure may occur at a critical time in the process (e.g., continuous casting) and generate a significant production loss; - detecting the failure, supplying the corresponding spare part, preparing the maintenance intervention, etc. also generates considerable financial and time losses.

Until now, some suspicious phenomena could be detected directly by an operator during the normal operation of the hoisting appliance, offering the opportunity to a maintenance team to investigate a yet to come failure. But with the increasing use of autonomous systems, these earlier detections have disappeared, and have given rise to a need for a solution that can determine with a high level of confidence the future failure of a component before it happens.

To answer this need, one technological approach used in industry is to implement a solution based on digital twin, which reproduces the normal behavior of all - or part - of a system. Such a solution relies on development of one or several virtual sensor(s), which can efficiently predict physical values, such as torque, vibration, or temperature, that depend on the health of a machine.

The aim of a virtual sensor is to predict what would be a normal value at a precise operating point of the system and compare it with a real measured value. A significant difference between the measured value and the predicted value is then a sign of abnormal operation, and a hint that a failure may be about to occur.

The creation of a virtual sensor often implies a teaching phase, to learn how the system behaves. It is mandatory to collect and record the relevant data that directly influence the considered physical value. For example, the temperature of a motor depends on the electrical current, the speed, and the ambient temperature. If some of these data are missing, it is difficult - or impossible - to create a relevant virtual sensor, which would accurately predict the temperature of a motor. Collecting enough relevant data to feed the model on which the virtual sensor relies during this learning phase is therefore crucial.

However, one of the most common problems encountered during a learning phase is the difficulty (or even impossibility) of browsing all the machine's operating points.

Indeed, if all the relevant data are available, it is then necessary to carry out a significant number of recordings, to ensure that all the system's operating points are covered. For example, for a motor temperature, recordings should be made over the entire ambient temperature range (e.g. from 0°C to 40°C) to which the motor will be subjected. If the learning phase does not consider the entire ambient temperature range, the result of the virtual sensor in these missing learning areas will be false or at least inaccurate.

Similarly, if the volume of relevant data is very big, it becomes clear that learning cannot cover all operating points. For example, referring to the example of FIG.1 , building a vibration virtual sensor on a crane's hoist motion in the steel industry implies taking account of all parameters having an impact on vibration, namely:
- Hoist speed
- Hoist acceleration
- Load
- Angle of the sway (i.e. swinging of the suspended load)
- Angular speed of the sway
- Rotation speed
- Trolley speed
- Gantry speed.

This leads to a very high computational cost, coupled to a heavy burden on the operator of the crane for browsing the entire range of possible values for all eight parameters. In practice, such an exhaustive learning phase cannot be carried out.

A practical solution to reduce the number of operating points would be reducing the number of relevant data, by limiting motions of the hoisting appliance. In the previous example of a vibration virtual sensor on a crane's hoist motion in the steel industry, it could be possible, to allow efficient predictive maintenance, to forbid all other motions that could interfere in the vibration of the hoist motor. In such a way, it would be possible to develop a vibration virtual sensor which would only take into account the operating parameters of the hoist motor, and which would provide accurate predictions on its state of health, as long as its operation is isolated from the other motions of the crane, which would be forbidden.

A drawback of this solution is that forbidding combined motion of the different movable parts of the hoisting appliance decreases the performance of the crane. Such a decrease in productivity, which would directly result from an additional constraint implied by the predictive maintenance function, would hamper development of fully automated hoisting systems capable of transferring suspended loads autonomously along a trajectory.

Accordingly, there is a need for a method for operating a hoisting appliance providing high performance of production and efficient predictive maintenance result.

### Summary

This disclosure improves the situation.

It is proposed a method for operating a hoisting appliance spanning a hoisting area, the hoisting appliance comprising N≥2 movable parts for the transport of a load from a starting point to a destination point, the N movable parts being configured for a linear movement along any of three X, Y and Z orthogonal axes or for an angular movement, the method comprising, in a control device, choosing speed parameters for displacement of the N movable parts for transporting the load from the starting point to the destination point, by:
determining a set of speed parameters for displacement of said N movable parts belonging to an operating zone for which a predictive maintenance function of said hosting appliance yields results which are above a determined accuracy threshold;
selecting, among said set, speed parameters which minimize a travel time of said load from said starting point to said destination point.

In another aspect, it is proposed an apparatus for operating a hoisting appliance spanning a hoisting area, the hoisting appliance comprising N≥2 movable parts for the transport of a load from a starting point to a destination point, the N movable parts being configured for a linear movement along any of three X, Y and Z orthogonal axes or for an angular movement, the apparatus comprising:
one or more network interfaces to communicate with a communication network;
a memory configured to store code instructions executable by a processor;
a processor coupled to the network interfaces and configured to execute the code instructions stored in the memory, to:
   choose speed parameters for displacement of the N movable parts for transporting the load from the starting point to the destination point, by:
   determining a set of speed parameters for displacement of said N movable parts belonging to an operating zone for which a predictive maintenance function of said hosting appliance yields results which are above a determined accuracy threshold;
   selecting, among said set, speed parameters which minimize a travel time of said load from said starting point to said destination point.

In another aspect, it is proposed a computer software comprising instructions to implement at least a part of a method as defined here when the software is executed by a processor. In another aspect, it is proposed a computer-readable non-transient recording medium on which a software is registered to implement the method as defined here when the software is executed by a processor.

The following features, can be optionally implemented, separately or in combination one with the others:

The method further comprises a preliminary learning phase to create a digital twin model of the hosting appliance which is fed by a point cloud collected during normal operation of the hosting appliance, the point cloud comprising operating points defined as N-uplets of values for each of the speed parameters of the N movable parts, and the operating zone is defined as a zone for which a density of the point cloud is greater than a determined threshold.

Determining a set of speed parameters for displacement of said N movable parts comprises:
assigning a high priority level to one of said movable parts, called a reference movable part,
for each other movable part:
   determining a speed synchronizing curve drawing the speed of said other movable part as a function of a speed of said reference movable part, such that said other movable part and said reference movable part terminate motion at the same time for transporting the load from said starting point to said destination point,
   determining a set of remarkable operating points as points belonging to both said speed synchronizing curve and to a 2D representation of said operating zone in a plane of said speed synchronizing curve.

Selecting, among said set, speed parameters which minimize a travel time of said load comprises:
choosing an operating speed for said reference movable part as a maximum speed belonging to the sets of remarkable operating points determined for each other movable part,
for each other movable part, choosing an operating speed on said speed synchronizing curve as a function of said operating speed chosen for said reference movable part.

Assigning a high priority level to one of the movable parts comprises:
computing a minimal travel time for each movable part taking account of a maximum operating speed of the movable part and of a distance to be travelled by the movable part for the transport of the load from the starting point to the destination point;
choosing, as a reference movable part, the movable part associated to the maximum computed minimal travel time, called a reference travel time; and determining a speed synchronizing curve for each other movable part comprises:
calculating a minimum operating speed for the other movable part as a ratio of the distance to be travelled by the other movable part to the reference travel time;
calculating, for the other movable part, a ratio of the minimum operating speed to the maximum operating speed, called a speed ratio;
determining the speed synchronizing curve drawing the speed of the movable part as a function of a speed of the reference movable part, and having the speed ratio as a slope coefficient.

Selecting the speed parameters among the set is only performed if they allow achieving a productivity of the hoisting appliance greater than a determined threshold of productivity.

The hoisting appliance comprises a gantry and a trolley able to transport the load suspended to a hoist mechanism hosted in the trolley, the gantry is able to move substantially horizontally along the X axis, the trolley is able to move substantially horizontally along the Y axis, the hoist mechanism is able to move substantially vertically along the Z axis and the hoisting appliance comprises a rotation tool able to move angularly.

### Brief Description of Drawings

Other features, details and advantages will be shown in the following detailed description and on the figures, on which:
**Fig. 1**
   [Fig. 1] shows schematically an example of a hoisting appliance.
**Fig. 2**
   [Fig. 2] shows schematically an example of a communication system for operating a hoisting appliance according to an embodiment.
**Fig. 3**

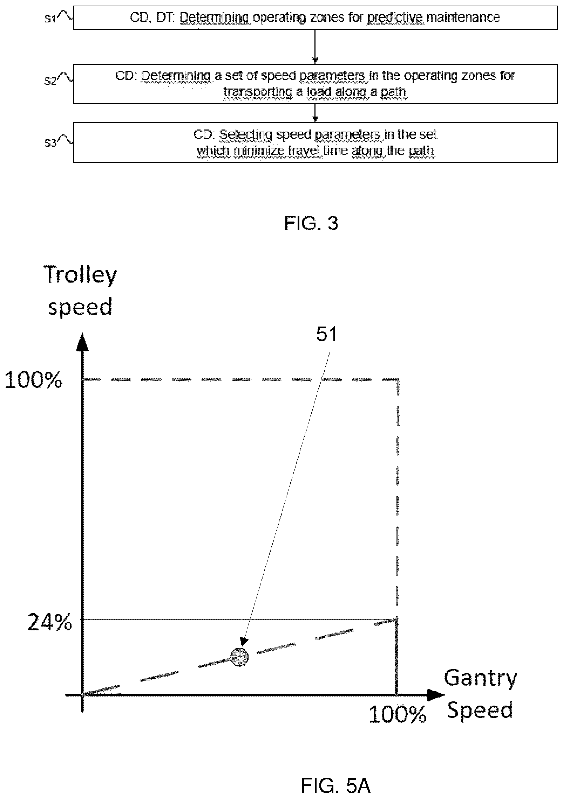

   [Fig. 3] is a flow chart illustrating a method for operating a hoisting appliance to achieve reliable predictive maintenance according to an embodiment.
**Fig. 4**

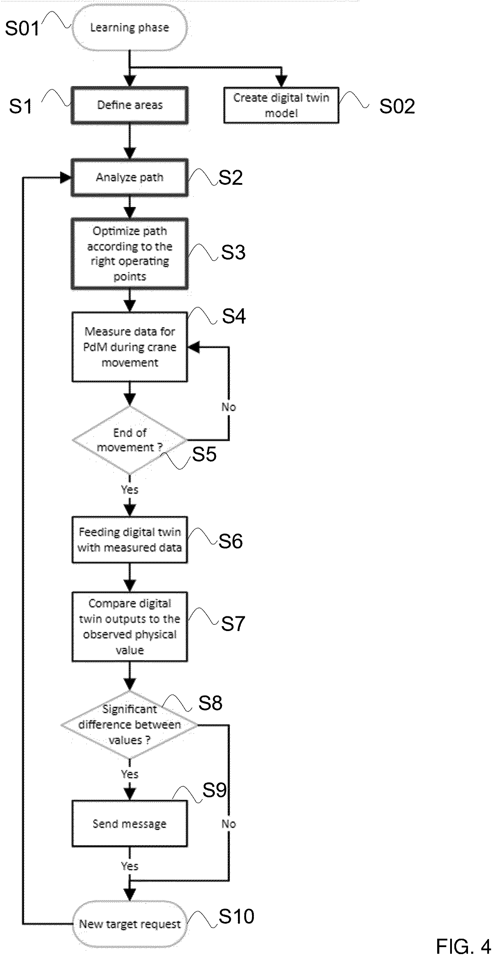

   [Fig. 4] is a flow chart illustrating a method for performing predictive maintenance of a hoisting appliance in accordance with the method of Fig. 3 according to an embodiment.
**Fig. 5A**
   [Fig. 5A] illustrates a representation of a speed synchronizing curve for a trolley of the hoisting appliance of Fig. 1 according to an embodiment.
**Fig. 5B**

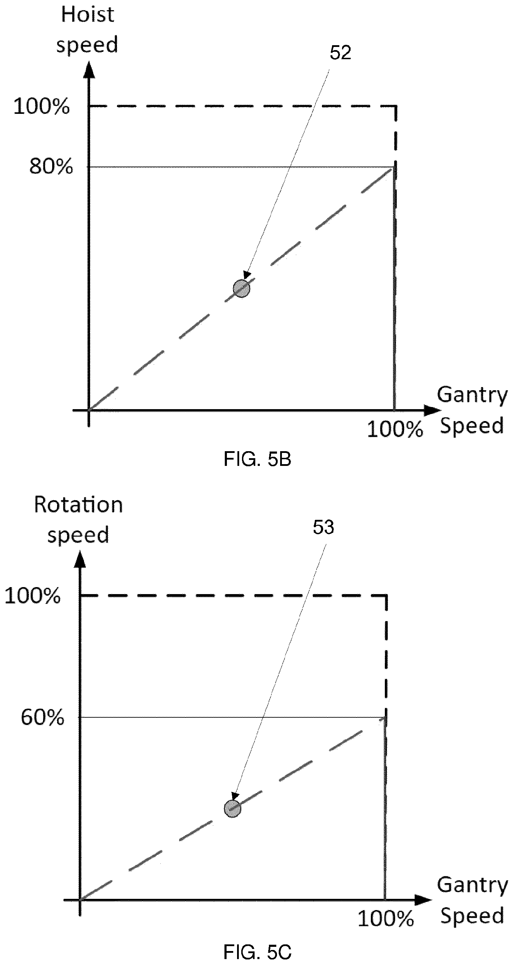

   [Fig. 5B] illustrates a representation of a speed synchronizing curve for a hoist of the hoisting appliance of Fig. 1 according to an embodiment.
**Fig. 5C**
   [Fig. 5C] illustrates a representation of a speed synchronizing curve for a rotation tool of the hoisting appliance of Fig. 1 according to an embodiment.
**Fig. 6A**

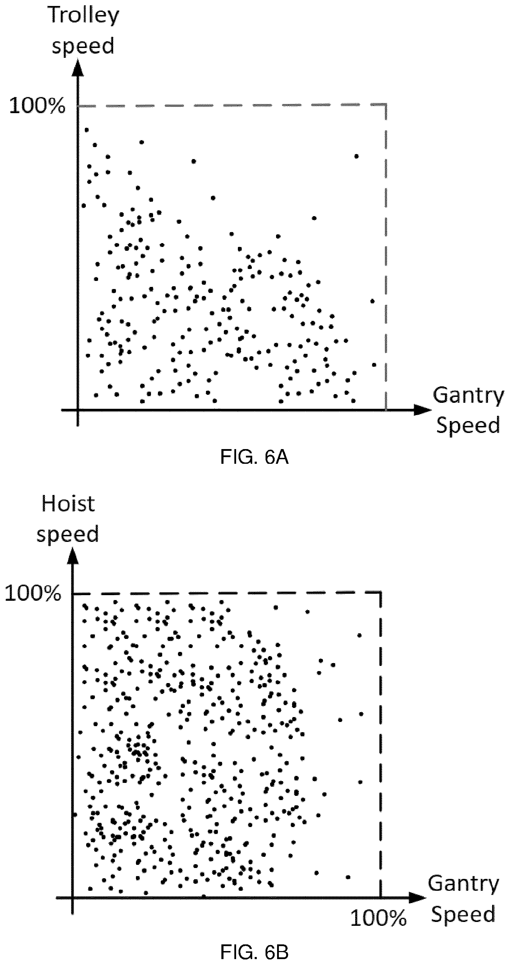

   [Fig. 6A] illustrates a 2D representation of a point cloud of operating points for trolley speed and gantry speed collected during operation of a hoisting appliance.
**Fig. 6B**
   [Fig. 6B] illustrates a 2D representation of a point cloud of operating points for hoist speed and gantry speed collected during operation of a hoisting appliance.
**Fig. 6C**

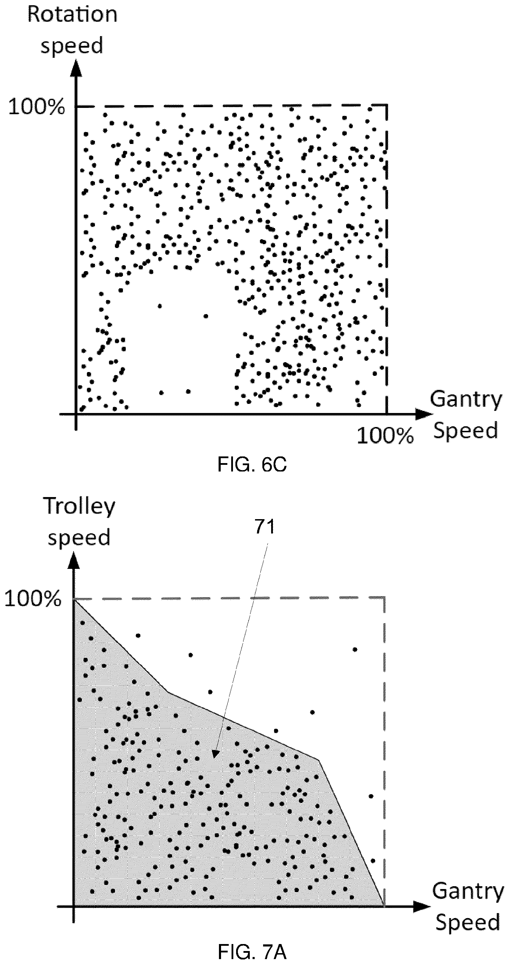

   [Fig. 6C] illustrates a 2D representation of a point cloud of operating points for rotation speed and gantry speed collected during operation of a hoisting appliance.
**Fig. 7A**
   [Fig. 7A] illustrates a representation of an operating zone for predictive maintenance for trolley speed and gantry speed.
**Fig. 7B**

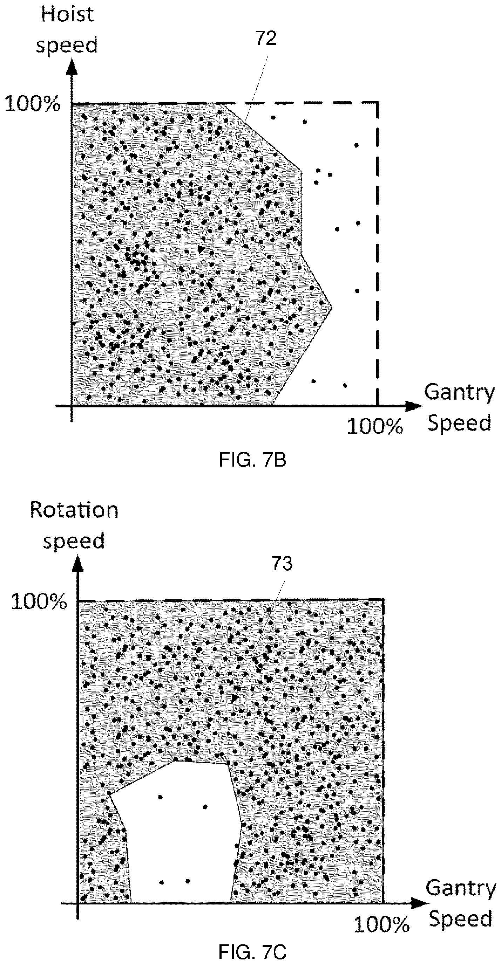

   [Fig. 7B] illustrates a representation of an operating zone for predictive maintenance for hoist speed and gantry speed.
**Fig. 7C**
   [Fig. 7C] illustrates a representation of an operating zone for predictive maintenance for rotation speed and gantry speed.
**Fig. 8A**

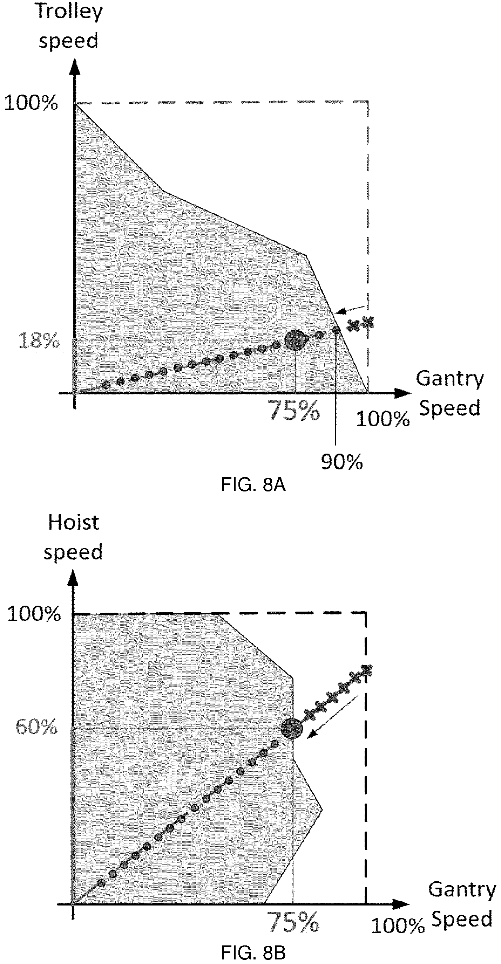

   [Fig. 8A] illustrates a combined representation of the operating zone of Fig. 7A and of the speed synchronizing curve of Fig. 5A allowing to choose an optimized speed parameter for the trolley.
**Fig. 8B**
   [Fig. 8B] illustrates a combined representation of the operating zone of Fig. 7B and of the speed synchronizing curve of Fig. 5B allowing to choose an optimized speed parameter for the hoist.
**Fig. 8C**

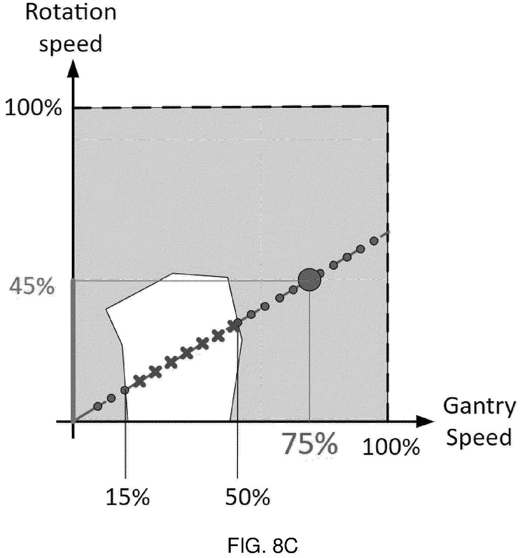

   [Fig. 8C] illustrates a combined representation of the operating zone of Fig. 7C and of the speed synchronizing curve of Fig. 5C allowing to choose an optimized speed parameter for the rotation tool.

### Description of Embodiments

The figures and the following description illustrate specific exemplary embodiments of the disclosure. It will thus be appreciated that those skilled in the art will be able to devise various arrangements that, although not explicitly described or shown herein, embody the principles of the disclosure and are included within its scope. Furthermore, any examples described herein are intended to aid in understanding the principles of the disclosure and are to be construed as being without limitation to such specifically recited examples and conditions. As a result, the disclosure is not limited to the specific embodiments or examples described below, but by the claims and their equivalents.

It is now referred to figure 2, which illustrates a communication system for operating a hoisting appliance while allowing efficient predictive maintenance. This communication system comprises a control device CD, a set of meter devices MD, a digital twin DT and a supervisory system SUP.

A hoisting area, such as a warehouse, a yard, a hall or other working area, is provided with a supervisory system SUP that is an IT control system for supervision of the hoisting area. The supervisory system provides information to the control device CD for trajectory execution, authorization i.e. access management, and security in general.

The control device CD is able to communicate with the supervisory system SUP, with the set of meter devices MD and with the digital twin DT through a telecommunication network TN. The telecommunication network may be a wired or wireless network, or a combination of wired and wireless networks. The telecommunication network can be associated with a packet network, for example, an IP ("Internet Protocol") high-speed network such as the Internet or an intranet or even a company-specific private network. The control device CD may be Programmable Logic Controllers (PLC) and other automation device able to implement industrial processes and able to communicate with the supervisory system for exchanging data such as requests, inputs, control data, etc.

In one embodiment, the set of meter devices MD includes devices for metering operating parameters of the hoisting appliance, such as a vibration sensor of the hoist motor, a torque meter, a temperature sensor, etc.

In one embodiment, the digital twin DT includes virtual sensors for predicting physical values of operating parameters of the hoisting appliance. Preferably, each virtual sensor of the digital twin DT corresponds to a meter device MD, thus allowing the control device CD to compare digital twin DT outputs to the observed physical values output by the set of metering devices MD.

The control device CD is configured to create a path to be followed by the crane for transporting a load from one place within the hoisting area to another.

The control device CD is configured to choose speed parameters for any movable part of the hoisting appliance which fulfill a joint objective of minimizing the travel time along the created path and operating the hoisting appliance in an operating zone for which the predictive maintenance function provided by the digital twin DT yields results which are above a determined accuracy threshold. For example, the control device CD chooses the values of the trolley speed, the gantry speed, the hoist speed and the rotation speed in the hoisting appliance and makes sure that these values allow operating the hoisting appliance in an operating zone for which the predictive maintenance function relying on the digital twin DT is reliable, while maximizing the production performance of the hoisting appliance.

With reference to FIG. 3, a method for operating a hoisting appliance for the transport of a load while jointly optimizing production level and predictive maintenance of the crane according to an embodiment comprises steps S1 to S3.

In step S1, the control device CD determines operating zones of the hoisting appliance for which the predictive maintenance function relying on the digital twin DT provides reliable results. Such operating zones are areas comprising enough known operating points of the hoisting appliance, which have been browsed during a learning phase used to create the digital twin DT. Operating the hoisting appliance in these operating zones assures to obtain an efficient predictive maintenance result.

In step S2, given a target request for transporting a load along a path from a starting point to a destination point in the hoisting area, the control device CD determines a set of speed parameters of the movable parts of the crane (e.g., trolley speed, gantry speed, hoist speed, rotation speed) which allow answering the request and which belong to the operating zones determined in step S1.

In step S3, the control device CD selects, within this set of speed parameters, the speed parameters of the movable parts of the crane which minimize the travel time of the load along the path, and hence, maximize the production performance of the crane.

Such a method may be integrated into a method for performing predictive maintenance of the hoisting appliance during its operation, as illustrated by the flow chart of FIG. 4.

Initially, in step S01, the control device CD performs a learning phase, during which operating points of the hoisting appliance are browsed during normal operation of the crane: relevant data is collected by the set of metering devices MD and recorded. In an embodiment, the collected data matches a point cloud comprising operating points defined as N-uplets of values for each of the speed parameters of the N movable parts of the hoisting appliance (for example, N=4 and the N-uplet of values comprises trolley speed, gantry speed, hoist speed and rotation speed). Such a learning phase may take place during a span of time ranging from several days to several weeks of normal operation of the hoisting appliance.

In step S02, a digital twin model is created to reproduce the normal behavior of all or part of the hoisting appliance. For example, the digital twin model comprises a virtual vibration sensor for the hoist motor, a virtual temperature sensor, a virtual torque sensor for predicting vibration, temperature and torque values at a precise operating point of the hoisting appliance (e.g. for a given speed of the trolley, the gantry, the hoist and the rotation tool). Such a digital twin model relies on a mathematical model of the hoisting appliance and of the interactions between its movable parts and is known in the prior art. The digital twin DT may be stored by the control device CD, or in a remote computing device in communication with the control device through the telecommunication network TN. Operations performed in steps S01 and S02 allow creation of the predictive maintenance function of the hoisting appliance.

Once steps S01 and S02 are completed, predictive maintenance of the hoisting appliance may be achieved while it is operated by the control device CD.

As described previously in relation to FIG. 3, in step S1, on the basis of the data collected during the learning phase S01 and of the number of operating points browsed during this phase, the control device CD defines operating zones of the movable parts of the hoisting appliance, as zones for which a density of the point cloud is greater than a determined threshold. Such zones, which comprise "enough" known operating points (high density, above the threshold), define areas where the predictive maintenance function is relevant. Zones which do not comprise enough known operating points (low density, below the threshold) are useless areas for the predictive maintenance function, or at least operating areas in which the predictive maintenance function would not achieve sufficiently reliable or accurate results.

For example, the area can be gridded (e.g. with squares of 10% by 10%, i.e. 100 squares). When there is a sufficient number of points in a square (e.g. 3), the square is included in the "known area". The determined threshold for the density of points may be set to 3 points / % of the surface in an embodiment.

In step S2, the control device CD analyzes the path to be travelled by the load, from a starting point to a destination point, and assigns priority levels to the different motions in the hoisting appliance. For example, taking account of the maximum possible speed of every movable part in the crane, the motion with the maximum travel time from the starting point to the destination point is assigned the highest priority level, as it is the motion which limits the production performance of the crane. This analysis of the path allows determining a set of speed parameters which both allow meeting the target request assigned to the hoisting appliance and belong to the operating zones;

In step S3, and as will be described in greater detail below in relation to FIG. 5a to FIG. 8c, the control device adapts the motion and the trajectory of the automatic crane to fulfill both objectives of predictive maintenance and production: path is optimized according to the right operating points, as determined by the control device CD.

In step S4, the set of metering devices MD measures data during crane movement along the path of the load. Step S5 is an end of movement test which leads to either continuing data measurement of step S4 if the hoisting appliance is still in movement for transport of the load to its destination point, or feeding the digital twin DT with the measured data in step S6 if the load has reached its destination point.

In step S7, the control device CD compares the physical values predicted by the digital twin DT to the observed physical values measured by the set of metering devices MD. If a significant difference between the predicted and observed values is assessed in step S8, it may be a hint for an abnormal phenomenon, or a future defect or breakdown of a part. The control device CD raises an alert at step S9, which may take the form of an alert message sent to the supervisory system SUP. The alert message may be displayed on a Graphical User Interface GUI to inform an operator of the hoisting appliance that a maintenance intervention must be planned.

After step S9, or directly after step S8 in case the digital twin outputs match the physical values observed by the set of metering devices MD, the control device CD is ready to perform a new target request at step S10, and to create a new path to be followed by the crane for transporting a load from a new starting point to a new destination point within the hoisting area.

Operations performed by the control device CD during steps S1 to S3 will now be described in greater details in relation to FIG. 5A to FIG. 8C, which illustrate an exemplary embodiment of a hoisting appliance having four movable parts, namely a gantry, a trolley, a hoist mechanism and a rotation tool. Motions of all four movable parts may be combined. According to an embodiment, the control device CD seeks an optimal solution for combining all four motions to reach the best production performance of the hoisting appliance, along with reliable measurement for predictive maintenance monitoring. The skilled person will easily generalize this exemplary embodiment to a hoisting appliance having N≥4 movable parts.

To reach this objective, the control device must, on the one hand, analyze the path corresponding to the target of the hoisting appliance to maximize production level (steps S2 and S3) and, on the other hand, take account of the operating zones (step S1) in which monitoring the hoisting appliance for predictive maintenance provides reliable results.

In an exemplary embodiment, the hoisting appliance receives a request for transporting a load in the hoisting area from a starting point to a destination point. The control device CD first calculates the distance to be travelled by each movable part of the crane to answer this request. The table below provides an example of distance to be travelled by each movable part, along with its maximum possible speed.

**TABLE 1**

| | Distance to travel | Maximum speed |
|---|---|---|
| Gantry | 50m | 2m/s |
| Trolley | 6m | 1m/s |
| Hoist | 5m | 0.25m/s |
| Rotation | 90° | 6°/s |

The data in Table 1 allow computing the optimal operating time for achieving each requested motion, as indicated in the last column of Table 2 below.

**TABLE 2**

| | Distance to travel | Maximum speed | Time |
|---|---|---|---|
| Gantry | 50m | 2m/s | 25s |
| Trolley | 6m | 1m/s | 6s |
| Hoist | 5m | 0.25m/s | 20s |
| Rotation | 90° | 6°/s | 15s |

As may be observed, the most constraining time is associated to gantry motion, as it takes 25s for the gantry to travel from its starting point to its destination point, and it will hence be the movable part which completes its motion last. In this exemplary embodiment, the gantry motion is hence assigned the highest priority level and is chosen as the reference motion. Gantry is the reference movable part.

This 25s travel time induces the maximum production performance level of the hoisting appliance, which may be noted as t_prod_max. It allows computing, for each other movable part (trolley, hoist, rotation) a minimum speed below which the maximum production performance level, t_prod_max, would be degraded. For each movable part, the minimum speed is calculated as follows: min_speed=distance/ t_prod_max. Table 3 provides the minimum speed computed for each movable part.

**TABLE 3**

| | Distance to travel | Maximum speed | Time | Minimum speed |
|---|---|---|---|---|
| Gantry | 50m | 2m/s | 25s | / |
| Trolley | 6m | 1m/s | 6s | 0.24m/s |
| Hoist | 5m | 0.25m/s | 20s | 0.2m/s |
| Rotation | 90° | 6°/s | 15s | 3.6°/s |

It is then possible to compute, for each movable part, a ratio of this minimum speed to their maximum possible speed: Ratio=min_speed/max_speed. Results are recorded in Table 4 below.

**TABLE 4**

| | Distance to travel | Maximum speed | Time | Minimum speed | Ratio |
|---|---|---|---|---|---|
| Gantry | 50m | 2m/s | 25s | / | / |
| Trolley | 6m | 1m/s | 6s | 0.24m/s | 24% |
| Hoist | 5m | 0.25m/s | 20s | 0.2m/s | 80% |
| Rotation | 90° | 6°/s | 15s | 3.6°/s | 60% |

The computed ratios allow deriving a speed synchronizing curve for each movable part (trolley, hoist, rotation) as a function of the speed of the reference movable part, i.e. of the gantry speed, such that all four motions (along the X, Y, Z axes and the angular movement) terminate at the same time. These speed synchronizing curves are illustrated in dashed lines in Fig. 5A to 5C for the trolley (FIG.5A), the hoist (FIG. 5B) and the rotation (FIG.5C).

As may be understood when looking at Fig. 5A to 5C, if the gantry travels at 100% of its maximum speed, while the trolley travels at 24% of its maximum speed, the hoist travels at 80% of its maximum speed and the rotation tool travels at 60% of its maximum speed, the hoisting appliance will take 25s to achieve its target request. Therefore, as long as the trolley speed is greater than 24% of its maximum speed, the hoist speed is greater than 80% of its maximum speed and the rotation speed is greater than 60% of its maximum speed, the target request achievement time will also be of 25s. However, if either the trolley speed is smaller than 24% of its maximum speed, or the hoist speed is smaller than 80% of its maximum speed or the rotation speed is smaller than 60% of its maximum speed, the target request achievement time will be greater than 25s.

In other words, if, for any reason, the gantry speed should be reduced to, say, 50% of its maximum speed, it would be possible to reduce the speed of the three other movable parts in the same ratio, without decreasing the production performance of the crane more severely: the travel time of the hoisting appliance would then be 50s. Points 51 to 53 on Fig. 5A to 5C illustrate what would be a possible speed parameter for the trolley, the hoist and the rotation tool, for optimizing the production performance of the crane, in case the gantry speed would be reduced to 50% of its maximum speed. It is hence possible to define a set of remarkable operating points for each movable part along the dashed line of the speed synchronizing curve. The speed parameters of each movable part must be chosen among this set to minimize the travel time of the hoisting appliance, and hence optimize its production performance level.

Moreover, these speed parameters must also be chosen so as to achieve a reliable predictive maintenance for the hoisting appliance.

Operating zones of the hoisting appliance in which the predictive maintenance function yields results above a determined accuracy or reliability threshold must be determined (step S1).

FIG. 6A to 6C illustrate a 2D representation of a point cloud of operating points which have been browsed during the learning phase S01. Each point in such a point cloud may be represented as a vector comprising four components, namely gantry speed, trolley speed, hoist speed and rotation speed. FIG. 6A illustrates a 2D representation of this point cloud in a plane defined by the gantry speed on an X-axis and the trolley speed on a Y-axis. FIG. 6B illustrates a 2D representation of this point cloud in a plane defined by the gantry speed on an X-axis and the hoist speed on a Y-axis. FIG. 6C illustrates a 2D representation of this point cloud in a plane defined by the gantry speed on an X-axis and the rotation speed on a Y-axis.

When observing the 2D representation of the operating points cloud on FIG. 6A to 6C, it is possible to identify zones in which the density of points is greater than a determined density threshold, and hence in which there are enough data recorded during the learning phase S01 to achieve a reliable predictive maintenance of the crane. FIG. 7A to 7C show grey zones, referred to as zones 71 to 73, in which the density of known operating points is greater than 3 points / % of the surface, and in which the predictive maintenance function of the hoisting appliance can thus provide reliable results.

The speed synchronizing curves of FIG. 5A to 5C can be superimposed on the operating zones representations of FIG. 7A to 7C for each movable part of the hoisting appliance, as illustrated in FIG. 8A to 8C. For each movable part, it is possible to identify the set of remarkable operating points which belong both to the speed synchronizing curve and to the operating zone for reliable predictive maintenance. On FIG. 8A to 8C, these points are illustrated as dots. Operating points belonging to the speed synchronizing curve but out of the operating zone for reliable predictive maintenance (i.e., out of zones 71, 72 or 73) are illustrated with crosses.

In this exemplary embodiment, the set of remarkable operating points for the trolley corresponds to a range of trolley speed values comprised between 0 and 90% of the gantry speed, as shown on FIG. 8A. The set of remarkable operating points for the hoist mechanism corresponds to a range of hoist speed values comprised between 0 and 75% of the gantry speed, as shown on FIG. 8B. The set of remarkable operating points for the rotation tool correspond to a range of rotation speed values comprised between 0 and 15% or between 50% and 100% of the gantry speed, as shown on FIG. 8C.

The control device CD determines the optimal solution for achieving the target request by selecting the best percentage of gantry speed for which a corresponding speed for the other movable parts of the hoisting appliance belongs to the set of remarkable operating points shown as dots on FIG. 8A to 8C. In this exemplary embodiment, this optimal solution corresponds to the gantry travelling at 75% of its maximum speed. The trolley speed is then set at 18% of its maximum speed, the hoist speed is set at 60% of its maximum speed and the rotation speed is set at 45% of its maximum speed. The corresponding optimum operating point is hence (75%, 18%, 60%, 45%), as illustrated in Table 5 below, and the control device chooses a speed parameter of 1.5m/s for the gantry, of 0.18m/s for the trolley, of 0.15m/s for the hoist mechanism and of 2.7°/s for the rotation tool.

**TABLE 5**

| | Distance to travel | Maximum speed | Ratio of maximum speed | Operating speed | Travel time |
|---|---|---|---|---|---|
| Gantry | 50m | 2m/s | 75% | 1.5m/s | 33.3s |
| Trolley | 6m | 1m/s | 18% | 0.18m/s | 33.3s |
| Hoist | 5m | 0.25m/s | 60% | 0.15m/s | 33.3s |
| Rotation | 90° | 6°/s | 45% | 2.7°/s | 33.3s |

In this exemplary embodiment, the optimum time for achieving the target request by the hoisting appliance, while allowing reliable monitoring of the crane is 33.3s. The production performance level of the hoisting appliance is hence decreased by 33%, as compared to the maximum production level t_prod_max which would have been achieved with a travel time of 25s. Yet, it allows a reliable prediction of the state of health of the hoisting appliance which, in the long term, guarantees a satisfying production performance level, by avoiding unplanned interruptions to machine operation.

It is however possible, in an embodiment, to set a maximum threshold of production level decrease, below which the control device CD cannot go. This threshold can be adapted e.g., by an operator of the crane, depending on the production constraints of the hoisting appliance and may vary over time or cycles of operation. For example, the operator may decide that the production performance level should not be smaller than 60% of the maximum production level t_prod_max. In the above exemplary embodiment, it means the maximum time for achieving the request by the hoisting appliance should not be greater than 35s.

In case the control device CD cannot determine speed parameters for the gantry, trolley, hoist mechanism and rotation tool which satisfy this constraint, it may decide to run the hoisting appliance at its maximum speed and waives its monitoring through use of the digital twin. In such a case, it may emit an alert, which can be sent to the supervisory system SUP. The alert message may be displayed on a Graphical User Interface GUI to inform an operator of the hoisting appliance that the predictive maintenance function is deactivated.

An embodiment comprises a control device CD under the form of an apparatus comprising one or more processor(s) I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read-only memory (ROM, erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks ad magnetic tapes, hard drives, or optically readable digital data storage media.

## Claims

1. Method for operating a hoisting appliance (1) spanning a hoisting area, the hoisting appliance comprising N≥2 movable parts (2, 3, 4) for the transport of a load (6) from a starting point to a destination point, said N movable parts being configured for a linear movement along any of three X, Y and Z orthogonal axes or for an angular movement,
wherein the method comprises choosing speed parameters for displacement of said N movable parts for transporting the load from said starting point to said destination point, by, in a control device (CD):
determining (S2) a set of speed parameters for displacement of said N movable parts belonging to an operating zone (71, 72, 73) for which a predictive maintenance function of said hosting appliance yields results which are above a determined accuracy threshold;
selecting (S3), among said set, speed parameters which minimize a travel time of said load from said starting point to said destination point.

2. The method of claim 1, further comprising a preliminary learning phase (S01) to create a digital twin (DT) model of said hosting appliance which is fed by a point cloud collected during normal operation of said hosting appliance, said point cloud comprising operating points defined as N-uplets of values for each of the speed parameters of the N movable parts, wherein said operating zone (71, 72, 73) is defined as a zone for which a density of said point cloud is greater than a determined threshold.

3. The method of claim 1 or 2, wherein determining a set of speed parameters for displacement of said N movable parts comprises:
assigning a high priority level to one of said movable parts, called a reference movable part,
for each other movable part:
determining a speed synchronizing curve drawing the speed of said other movable part as a function of a speed of said reference movable part, such that said other movable part and said reference movable part terminate motion at the same time for transporting the load from said starting point to said destination point,
determining a set of remarkable operating points as points belonging to both said speed synchronizing curve and to a 2D representation of said operating zone in a plane of said speed synchronizing curve,
and wherein selecting, among said set, speed parameters which minimize a travel time of said load comprises:
choosing an operating speed for said reference movable part as a maximum speed belonging to the sets of remarkable operating points determined for each other movable part,
for each other movable part, choosing an operating speed on said speed synchronizing curve as a function of said operating speed chosen for said reference movable part.

4. The method of claim 3, wherein assigning a high priority level to one of said movable parts comprises:
computing a minimal travel time for each movable part taking account of a maximum operating speed of said movable part and of a distance to be travelled by said movable part for the transport of the load from said starting point to said destination point;
choosing, as a reference movable part, said movable part associated to the maximum computed minimal travel time, called a reference travel time;
and wherein determining a speed synchronizing curve for each other movable part comprises:
calculating a minimum operating speed for said other movable part as a ratio of said distance to be travelled by said other movable part to said reference travel time;
calculating, for said other movable part, a ratio of said minimum operating speed to said maximum operating speed, called a speed ratio;
determining said speed synchronizing curve drawing the speed of said movable part as a function of a speed of said reference movable part, and having said speed ratio as a slope coefficient.

5. The method according to any preceding claim, wherein selecting said speed parameters among said set is only performed if they allow achieving a productivity of said hoisting appliance greater than a determined threshold of productivity.

6. The method according to any preceding claim, wherein said hoisting appliance (1) comprises a gantry (3) and a trolley (2) able to transport the load (6) suspended to a hoist mechanism (4) hosted in the trolley, wherein the gantry is able to move substantially horizontally along the X axis, the trolley is able to move substantially horizontally along the Y axis, the hoist mechanism is able to move substantially vertically along the Z axis and wherein said hoisting appliance comprises a rotation tool able to move angularly.

7. An apparatus for operating a hoisting appliance spanning a hoisting area, the hoisting appliance comprising N≥2 movable parts for the transport of a load from a starting point to a destination point, said N movable parts being configured for a linear movement along any of three X, Y and Z orthogonal axes or for an angular movement, the apparatus comprising:
one or more network interfaces to communicate with a communication network;
a memory configured to store code instructions executable by a processor;
a processor coupled to the network interfaces and configured to execute the code instructions stored in the memory, to:
choose speed parameters for displacement of said N movable parts for transporting the load from said starting point to said destination point, by:
determining a set of speed parameters for displacement of said N movable parts belonging to an operating zone for which a predictive maintenance function of said hosting appliance yields results which are above a determined accuracy threshold;
selecting, among said set, speed parameters which minimize a travel time of said load from said starting point to said destination point.

8. The apparatus of claim 7, wherein said hoisting appliance comprises a gantry and a trolley able to transport the load suspended to a hoist mechanism hosted in the trolley, wherein the gantry is able to move substantially horizontally along the X axis, the trolley is able to move substantially horizontally along the Y axis, the hoist mechanism is able to move substantially vertically along the Z axis and wherein said hoisting appliance comprises a rotation tool able to move angularly,
and wherein said processor is configured to execute the code instructions stored in the memory to choose speed parameters for displacement of the gantry, the trolley, the hoist mechanism and the rotation tool, which fulfill said joint objective.

9. The apparatus of claim 7 or 8, wherein said processor is configured to execute the code instructions stored in the memory to execute the method of any of claims 1 to 6.

10. A computer software comprising instructions to implement a method for operating a hoisting appliance according to any of claims 1 to 6 when the software is executed by a processor.

11. A non-transitory machine-readable storage medium encoded with instructions executable by a processor, the non-transitory machine-readable storage medium comprising instructions to implement a method for operating a hoisting appliance according to any of claims 1 to 6.
